# EUROPÄISCHE PATENTANMELDUNG

(11) **EP 1 209 031 A2**
(43) Veröffentlichungstag der Anmeldung: **29.05.2002**
(21) Anmeldenummer: 01122983.8
(22) Anmeldetag: 26.09.2001
(51) Int. Cl.: B60R 1/06, B60R 1/07

(54) **Verstellvorrichtung für Kraftfahrzeug-Aussenspiegel**

(30) Priorität: 25.11.2000 DE 10058725
(71) Anmelder: Bühler Motor GmbH, 90459 Nürnberg (DE)
(72) Erfinder: Harbauer, Andreas, 90491 Nürnberg (DE)

(57) **Zusammenfassung**

Verstellvorrichtung für den Außenspiegel eines Kraftfahrzeugs mit einem Antriebsgehäuse, an dem ein über ein zentrales Kugel- Kalottenlager gelagerter Spiegelglasträger ist, der mit sich kreuzenden metallischen Zahnbändern (10,11), Ketten oder dergleichen versehen ist, die das schalenartige Antriebsgehäuse umgreifend in Eingriff mit den Abtriebszahnrädern zweier im Antriebsgehäuse angeordneter Antriebsmotoren stehen, und mit einer elektrischen Kontaktierungseinrichtung für das Spiegelglas zum Zuführen elektrischer Energie für die Spiegelheizung, die Spiegelabdunkelung oder andere Verbraucher, wobei der Energietransport über die im Kreuzungsbereich gegeneinander elektrisch isolierten Zahnbänder (10,11) erfolgt.

## Beschreibung

Die Erfindung bezieht sich auf eine Verstellvorrichtung für den Außenspiegel eines Kraftfahrzeugs mit einem Antriebsgehäuse, an dem über ein zentrales Kugel- Kalottenlager ein Spiegelglasträger gelagert ist, der mit sich kreuzenden metallischen Zahnbändern, Ketten oder dergleichen versehen ist, die das schalenartige Antriebsgehäuse umgreifend und dabei die Gelenkkugel in die Gelenkkalotte drückend in Eingriff mit den Abtriebszahnrädern zweier im Antriebsgehäuse angeordneter Antriebsmotoren stehen, und mit einer elektrischen Kontaktierungseinrichtung für das Spiegelglas zum Zuführen elektrischer Energie für die Spiegelheizung, die Spiegelabdunkelung oder andere Verbraucher.

Ein wesentliches Problem bei derartigen Verstellvorrichtungen bildet die elektrische Kontaktierung des Spiegelglases und die Energieführung von der äußeren Stromquelle zu den Verbrauchern, seien dies nun die Spiegelheizung, die Spiegelverdunkelung, der elektrische Antrieb oder dergleichen. Neben einer direkten Kontaktierung des Spiegelglases von außen sind dabei auch bereits Lösungen vorgeschlagen worden, bei denen die Energie über einen Stecker des Antriebsgehäuses zugeführt, in dessen Innenraum weitergeleitet und über dem Spiegelglasträger zugekehrte Durchbrüche des Antriebsgehäuses durchgeschleift wird, um dann gegen Kontakte am Spiegelglas angeschlossen zu werden. All diese bekannten Varianten sind jedoch sowohl vom baulichen Aufwand als auch insbesondere von der Montage her sehr aufwändig.

Der Erfindung liegt daher die Aufgabe zugrunde, eine Verstellvorrichtung der eingangs genannten Art so auszugestalten, dass bei einfachem Aufbau und sehr einfacher Montage ein Energietransport von der äußeren Energiequelle zu den Verbrauchern erfolgen kann.

Zur Lösung dieser Aufgabe ist erfindungsgemäß vorgesehen, dass der Energietransport über die im Kreuzungsbereich gegeneinander elektrisch isolierten Zahnbänder erfolgt, was bevorzugt in der Weise geschieht, dass die Kontaktierung der Zahnbänder zur Zuführung der elektrischen Energie über fest mit dem Antriebsgehäuse verbundene Schleiferfedern erfolgt.

Diese Schleiferfedern können dabei in einer ersten Ausführungsform Durchbrüche des Antriebsgehäuses durchgreifende von innen, vorzugsweise an glatten Abschnitten der Zahnbänder anliegen, wobei sie in diesem Fall bevorzugt mit einer das Antriebsgehäuse seitlich durchsetzenden, zweckmäßigerweise an diesem angeformten, Einspeise-Steckerteil verbunden sein können.

In einer zweiten Ausführungsform können die Schleiferfedern, wiederum vorzugsweise an glatten Abschnitten der Zahnbänder von außen anliegen. Die Schleiferfedern befinden sich also in diesem Fall zwischen dem Antriebsgehäuse und dem umgebenden Außengehäuse des Kfz-Außenspiegels, sodass sie alternativ zur Befestigung am Antriebsgehäuse auch am starr mit diesem verbundenen Außengehäuse selbst angelenkt sein können.

Um eine gute Kontaktierung von den Enden der Zahnbänder zum Spiegelglas zu erhalten, die auch angesichts der bei der Verschwenkung sich ergebenden Bewegungen zwischen der Spiegelglasoberfläche, also den dort angebrachten Gegenkontakten und den Enden der Zahnbänder voll wirksam ist, kann in Ausgestaltung der Erfindung vorgesehen sein, dass die Kontakt-Enden der Zahnbänder über gewölbte Abschnitte von vorzugsweise U-förmigen Kontaktfedern an den Gegenkontakten des Spiegelglases anliegen. Die gewölbten Abschnitte rollen sich dann bei den Verschwenkungen des Spiegelglasträgers gegenüber dem Antriebsgehäuse an den Gegenkontakten ab.

Weitere Vorteile, Merkmale und Einzelheiten der Erfindung ergeben sich aus der nachfolgenden Beschreibung zweier Ausführungsbeispiele sowie anhand der Zeichnung. Dabei zeigen:
- Fig. 1: Eine perspektivische Ansicht einer erfindungsgemäßen Verstellvorrichtung von rückwärts,
- Fig. 2: eine teilweise geschnittene Seitenansicht der Verstellvorrichtung nach Fig. 1,
- Fig. 3: einen schematischen Querschnitt durch die Verstellvorrichtung zur Verdeutlichung des Energietransports über die Zahnbänder bei Kontaktierung von innen,
- Fig. 4: einen der Fig. 3 entsprechenden schematischen Schnitt bei einer Kontaktierung der Zahnbänder von außen und
- Fig. 5: einen vergrößerten Schnitt längs der Linie V - V in Fig. 2 zur Verdeutlichung der Kontaktierung der Gegenkontakte am Spiegelglas.

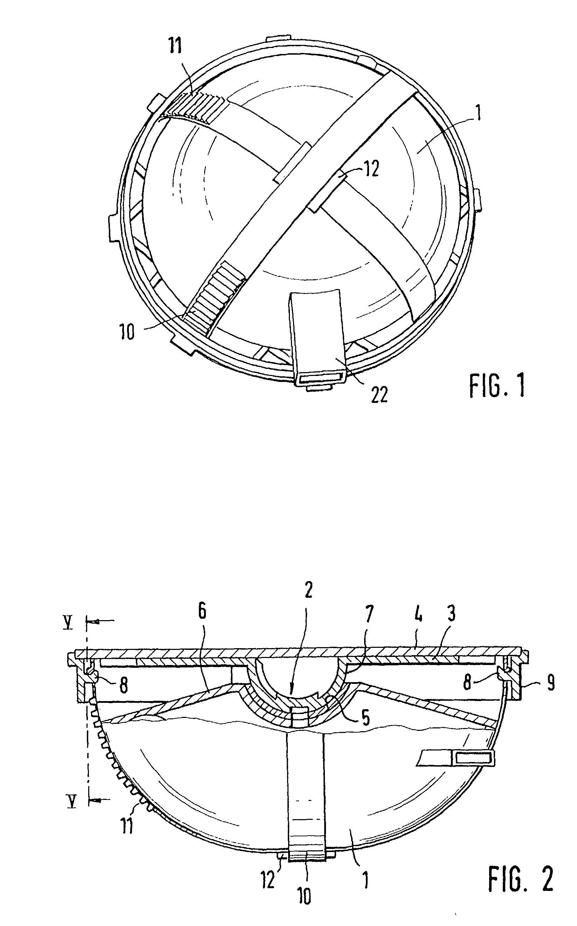

Die in den Fig. 1 und 2 gezeigte Verstellvorrichtung umfasst ein Antriebsgehäuse 1 und ein mit diesem über eine Kugel-Kalottenlagerung 2 gelenkig verbundenen Spiegelglasträger 3 auf dem das eigentliche Spiegelglas 4 gehaltert ist. Das Kugel-Kalottenlager 2 ist gebildet durch eine Gelenkkalotte 5, die in der dem Spiegelträger zugewandten Wand 6 des Antriebsgehäuses eingeformt ist und eine zentrische am Spiegelglasträger 3 angeformte Gelenkkugel 7. An Befestigungsgliedern 8 einer umlaufenden Ringwand 9 des Spiegelglasträgers 2 sind zwei sich kreuzende Zahnbänder 10 und 11 befestigt, die das Antriebsgehäuse umgreifen und aufgrund ihrer elastischen Ausbildung, die ggf. durch zusätzliche Wellungen noch verstärkt werden kann, die Gelenkkugel 7 in die Gelenkkalotte 5 drücken und somit das Auseinanderfallen des Antriebsgehäuses und des Spiegelglasträgers verhindern. In die Zahnabschnitte der Zahnbänder, die daneben auch glatte ungetrennte Abschnitte aufweisen sollen, greifen nicht gezeigte Abtriebszahnräder der im Inneren des Antriebsgehäuses angeordneten Verstellmotoren ein, um den Spiegelglasträger 3 um zwei einander senkrecht kreuzende Achsen, die jeweils durch die Verbindungslinien der Befestigungsglieder 8 der beiden Zahnbänder gebildet sind, zu verschwenken.

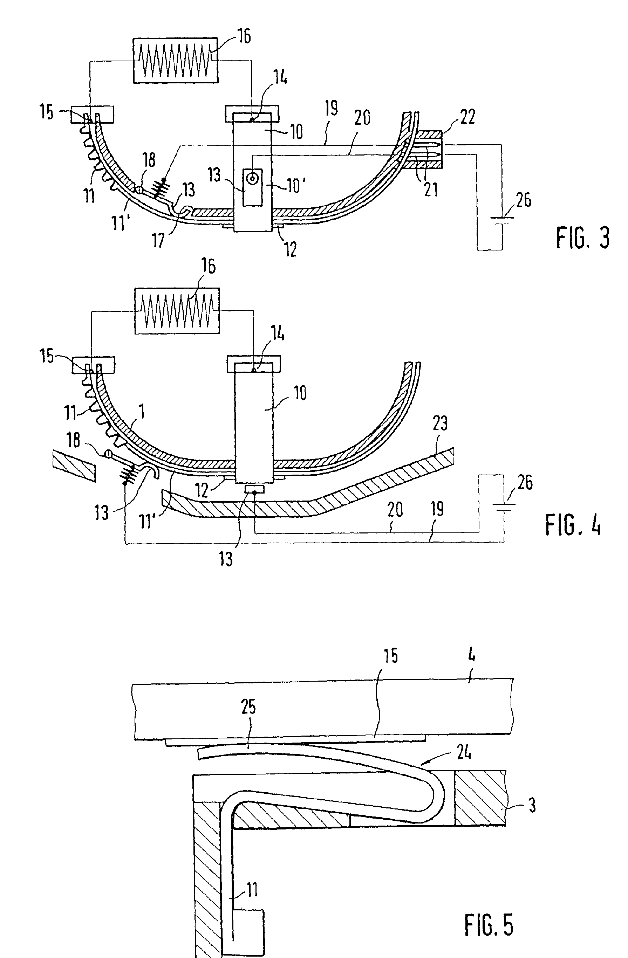

Erfindungsgemäß sollen die Zahnbänder 10 und 11 nicht nur zum Zusammenhalten von Antriebsgehäuse und Spiegelglasträger und zur Schwenkverstellung dienen, sondern gleichzeitig auch den Energietransport mit übernehmen. Zu diesem Zweck sind die Zahnbänder 10 und 11 im Kreuzungsbereich durch eine Isolierplatte 12 gegeneinander isoliert und über Schleiferfedern 13 mit der äußeren Stromquelle 26 verbunden. Jeweils ein Ende der so kontaktierten Zahnbänder 10, 11 ist mit einem Gegenkontakt 14 bzw. 15 beispielsweise der Spiegelheizung 16 oder eines anderen Verbrauchers verbunden. Beim Ausführungsbeispiel nach Fig. 3, das lediglich einen gegenüber Fig. 2 sehr vereinfachten schematischen Schnitt durch die Verstellvorrichtung darstellt, liegen die Schleiferfedern 13, Durchbrüche 17 des Antriebsgehäuses 1 durchgreifend, von innen an einem glatten Abschnitt 11' bzw. 10' der Zahnbänder 10 und 11 an. Ihr Schwenklager 18 ist jeweils fest mit dem Antriebsgehäuse 1 verbunden. Bei dieser Ausführungsform nach Fig. 3 sind die Schleiferfedern über Verbindungsleitungen 19 und 20 mit den elektrischen Kontakten 21 eines an der Seite des Antriebsgehäuses 1 angeformten Steckerteils 22 verbunden, von wo aus über nicht gezeigte Gegensteckverbindungen die Verbindung zur elektrischen Versorgungsquelle 26 erfolgt. Die Leitungen 19 und 20 können dabei sowohl lose verlegte Leitungen als auch beispielsweise an der Innenseite des Antriebsgehäuses 1 angeordnete Leitbleche sein.

Beim Ausführungsbeispiel nach Fig. 4 erfolgt die Kontaktierung der Zahnbänder 10, 11 über die Schleiferfedern 13 von außen, wobei der Schwenkpunkt 18 sowohl neben den jeweiligen Zahnbändern 10, 11 am Antriebsgehäuse 1 als auch ggf. an dem andeutungsweise dargestelltem Außengehäuse 23 des Außenspiegels befestigt sein kann.

Der vergrößerte Schnitt in Fig. 5 zeigt die Kontaktfeder 24 am Ende eines der Zahnbänder, im vorliegenden Fall des Zahnbandes 11, mit deren Hilfe die Kontaktierung der Gegenkontakte, hier des Gegenkontakts 15, des Spiegelglases 4 erfolgt. Zu diesem Zweck ist der anliegende Federschenkel mit einem gewölbten Abschnitt 25 versehen, sodass bei der Relativbewegung des Spiegelglases 4 und des Gegenkontakts 15 gegenüber der Kontaktfeder infolge der Verschwenkung des Spiegelglases mit dem Spiegelglasträger 3 eine Abrollbewegung erfolgt und so der elektrische Kontakt stets und ohne Beschädigung des Gegenkontakts in gleicher Güte bestehen bleibt.

## Patentansprüche

1. Verstellvorrichtung für den Außenspiegel eines Kraftfahrzeugs mit einem Antriebsgehäuse, an dem ein über ein zentrales Kugel- Kalottenlager gelagerter Spiegelglasträger ist, der mit sich kreuzenden metallischen Zahnbändern, Ketten oder dergleichen versehen ist, die das schalenartige Antriebsgehäuse umgreifend in Eingriff mit den Abtriebszahnrädern zweier im Antriebsgehäuse angeordneter Antriebsmotoren stehen, und mit einer elektrischen Kontaktierungseinrichtung für das Spiegelglas zum Zuführen elektrischer Energie für die Spiegelheizung, die Spiegelabdunkelung oder andere Verbraucher, **dadurch gekennzeichnet, dass** der Energietransport über die im Kreuzungsbereich gegeneinander elektrisch isolierten Zahnbänder (10, 11) erfolgt.

2. Verstellvorrichtung nach Anspruch 1, **dadurch gekennzeichnet, dass** die Kontaktierung der Zahnbänder (10, 11) zur Zuführung der elektrischen Energie über fest mit dem Antriebsgehäuse (1) verbundene Schleiferfedern (13) erfolgt.

3. Verstellvorrichtung nach Anspruch 2, **dadurch gekennzeichnet, dass** die Schleiferfedern (13) Durchbrüchen (17) des Antriebsgehäuses (1) durchgreifend von innen, vorzugsweise an glatten Abschnitten (10', 11'), der Zahnbänder (10, 11) anliegen.

4. Verstellvorrichtung nach Anspruch 3, **dadurch gekennzeichnet, dass** sie Schleiferfedern (13) mit einer das Antriebsgehäuse (1) seitlich durchsetzenden, vorzugsweise an diesem angeformten, Einspeise-Steckerteil (22) verbunden sind.

5. Verstellvorrichtung nach Anspruch 2, **dadurch gekennzeichnet, dass** die Schleiferfedern (13) vorzugsweise glatten Abschnitten (10', 11') der Zahnbänder (10, 11) von außen anliegen.

6. Verstellvorrichtung nach Anspruch 5, **dadurch gekennzeichnet, dass** die Schleiferfedern (13) an der Innenseite des Außengehäuses (23) des Außenspiegels befestigt sind.

7. Verstellvorrichtung nach einem der Ansprüche 1 bis 6, **dadurch gekennzeichnet, dass** die Kontakt-Enden der Zahnbänder (10, 11) über gewölbte Abschnitte (25) von vorzugsweise U-förmigen Kontaktfedern (24) an den Gegenkontakten (14, 15) des Spiegelglases (3) anliegen.
